# EUROPEAN PATENT APPLICATION

(11) **EP 1 520 497 A2**
(43) Date of publication of application: **06.04.2005**
(21) Application number: 04256130.8
(22) Date of filing: 04.10.2004
(51) Int. Cl.: A47G 19/22, C02F 1/00

(54) **Water Storage Apparatus**

(30) Priority: 03.10.2003 GB 0323237; 27.02.2004 GB 0404293
(71) Applicant: STRIX LIMITED, Ronaldsway, Isle of Man IM9 2RG (GB)
(72) Inventor: Scott, Michael James, Isle of Man IM9 5PH (GB)
(74) Representative: Samuels, Adrian James

(57) **Abstract**

A water treatment and storage vessel has a reservoir 50 for untreated water and filter means 51 in fluid communication with the reservoir 50. A main vessel portion 2 is provided for receiving and storing treated water which comprises a Peltier-effect device 25 for removing heat from treated water therein, thereby cooling the water.

## Description

The present invention relates to the filtering, storage and cooling of liquids, particularly water, in domestic contexts.

Although domestic water is often strictly regulated so as to be fit for drinking, there are many possible sources of contamination. Consumer concerns about the potential aesthetic and health related problems resulting from the presence of these contaminants has promoted the development of home water treatment systems to improve the quality of the water supply. Such systems can reduce the presence of common contaminants resulting in clearer, safer and better tasting and smelling water for household use.

Typically domestic water filtration is carried out using a filter jug which may, for example, comprise a vessel for containing treated water, a reservoir for containing untreated water and a filter cartridge therebetween for treating the water. Such jugs and filters are well known.

A number of different water filter jugs are available in a variety of shapes and sizes. It has been found that consumers often wish to keep treated water chilled ready for drinking and therefore many available jugs are now sized so as to be suitable for storage within a refrigerator. For example, slim-line jugs are available for keeping in a fridge door.

Since domestic refrigerators are generally of a compact size the storage available is limited. Thus, it is undesirable for a domestic water filter jug to occupy an excessive amount of space within a refrigerator. Therefore, when purchasing a water filter jug a user must generally choose between a larger capacity worktop jug or a considerably smaller capacity jug, for example 1.5 litres, for storing within a refrigerator. Even if a user chooses a limited capacity jug for storing in a refrigerator, the space occupied by the filter jug within the refrigerator is still likely be inconvenient.

When viewed form a first aspect the present invention provides a portable water treatment and storage vessel comprising a reservoir for untreated water, filter means in fluid communication with said reservoir and a main vessel portion for receiving and storing treated water, wherein said main vessel portion comprises electro-thermal cooling means for removing heat from the treated water therein, thereby cooling said water.

Thus it will be appreciated that in accordance with the present invention a filter jug itself may cool and keep cool the filtered water without the need to be placed in a refrigerator.

One proposal for a device said to be able to keep cold drinks cold as well as keep hot drinks warm is disclosed in US-5842353. The device comprises a cup shaped container with a Peltier device in the base of the container. By using the Peltier effect, the Peltier device may be used either to heat or cool the liquid in the cup by application of the appropriate DC voltage. A heat sink for the Peltier device is provided under the base along with fans to improve heat exchange with the surrounding air.

One problem with this proposal, which has been identified by the Applicant, is the location of the Peltier device in the base of the cup. This is conventional and effective when used in heating mode. When used in cooling mode however there would be no circulation due to convection since the cooled liquid would be denser than the uncooled liquid and so would remain in the base region of the cup. Therefore, for all of the liquid within the cup to be cooled equally it would be necessary to rely upon conduction within the liquid. This does not provide an efficient cooling mechanism. Whilst this may not be too significant in a small cup-sized device, which is primarily intended to maintain the initial temperature of a drink contained in it, the Applicant has appreciated that such a flaw could significantly compromise the effectiveness of an apparatus for bulk cooling of a larger body of water to reduce its temperature.

In particularly preferred embodiments the electro-thermal cooling means is provided on or in a side wall of the vessel such that, in use, the cooling means encourages circulation of the water being cooled within the vessel. Such an arrangement ensures that as water is cooled by the electro-thermal cooling means, and thus becomes denser, it sinks towards the base of the vessel. When the water reaches the bottom of the vessel it is deflected sideways and thus a convection flow is created, encouraging water from all parts of the vessel to flow past the cooling means. This convection flow enhances the efficiency with which the cooling means may cool all of the water in the vessel since it minimises warm and cool spots within the water and does not just rely on heat conduction.

This arrangement is novel and inventive in its own right, even if no integral filter means is provided. When viewed from a second aspect therefore, the present invention provides a liquid cooling vessel comprising an electro-thermal cooling means provided on or in a side wall of the vessel such that, in use, the cooling means encourages circulation of the liquid being cooled within the vessel.

Preferably the vessel in accordance with this aspect of the invention is suitable for cooling water.

Preferably the electro-thermal cooling means comprises a Peltier-effect device. A Peltier effect device is based on a solid state semiconductor which operates by transferring heat from one face to the opposite face when a suitable electric current is applied. The direction of heat transfer is dependent on the direction of the applied voltage and is thus reversible.

The cooling means is preferably located in or on the lower half of the side wall of the vessel. Such placement of the cooling means allows for operation of the vessel when only partially full of water.

The cooling means could comprise a Peltier or similar electro-thermal device simply mounted in or to the side of the vessel in direct contact with the water.

Preferably however, the cooling means further comprises a heat sink located within the vessel. A heat sink will further enhance the exchange of heat from the water to the electro-thermal device. The heat sink could be in thermal contact with the electro-thermal device via the vessel wall if the wall were sufficiently thermally conductive but is preferably mounted directly to the electro-thermal device. Again if the wall of the vessel is sufficiently thermally conductive the electro-thermal device could be mounted to the inner surface thereof. Preferably however the electro-thermal device is mounted within a cut-out in the side wall of the vessel. The rest of the vessel body may be made of any material, preferably at least the main vessel portion comprises a thermally insulating material, for example plastics, to help maintain the below-ambient temperature of the water therein. Most preferably the vessel body has a double walled construction in at least the region of the main vessel further to insulate the water within the vessel. It may be desirable to construct the vessel from a transparent material.

A further advantage of a heat sink located within the vessel is that the heat sink may be arranged to further enhance the desired circulation of the water within the vessel. Therefore, the heat sink preferably defines at least one generally vertical channel. In use, such a channel encourages the desirable circulation of the water in a vertical plane by channelling the water as it cools and flows downwardly to form a current.

The heat sink may comprise, for example, a thermally conductive element with one or more closed channels formed to encourage circulation. Preferably, however, at least one and preferably a plurality of open, generally vertically extending channels are defined by the heat sink. One possibility is that the channels could be formed by a plurality of generally vertically extending fins. Such arrangements assist vertical convection currents in the water whilst giving a relatively large surface area in contact with the water for good heat-exchanging. In one embodiment these are divergent although this is not essential.

In preferred embodiments however the heat sink comprises a plurality of pins or spikes, most preferably arranged in rows so as still to define a plurality of vertical channels. It has been found that such heat sinks can provide equivalent or superior heat transfer performance to more common vaned heat sinks whilst being lower in weight. Preferably the heat sink comprises aluminium.

The arrangement the pins may take any particular form and the profile may be influenced by a number of factors, for example manufacturing cost, cooling efficiency or fluid dynamic considerations.

It will be appreciated that, in use, the side of the electro-thermal device which is facing away from the water will be heated by the transfer of heat from the water. This side will therefore be referred to as the 'warm side'. The efficiency with which the electro-thermal device operates and thus the minimum average water temperature which may be achieved depend upon the efficiency with which heat is removed from the warm side of the electro-thermal device. Thus although the warm side of the cooling means could be bare, preferably means is provided for enhancing heat dissipation therefrom.

As discussed above the electro-thermal device could be mounted to a sufficiently thermally conductive surface of the vessel wall but is preferably mounted within a cut-out in the wall. According to preferred embodiments a heat dissipation means is provided in direct contact with the electro-thermal device on the warm side thereof.

The heat dissipation means preferably defines at least one generally vertically extending channel. In use, such a channel will encourage air to be drawn through it in the vertical direction to assist heat exchange with the surrounding air.

The heat dissipation means may comprise, for example, a thermally conductive element with one or more closed channels. Additionally or alternatively one or more open channels are defined. In one possibility channel(s) is/are formed by a plurality of generally vertically extending fins. As discussed above with regard to the heat sink in the water however, preferably the heat dissipation means comprises an array of pins. The heat dissipation means preferably comprises aluminium.

The heat dissipation means could simply be left exposed on the side of the vessel to allow heat to be exchanged with the surrounding air. Preferably however it is at least partially covered by a cover. This ensures that, in use, there is no risk of accidental user contact with the heat dissipation means which could become dangerously hot. The cover will have a plurality of openings to allow circulation of air past the heat dissipation means. Preferably the cover defines an enclosure comprising openings which are spaced vertically apart in upper and lower regions of the enclosure respectively such that, in use, air is drawn into the enclosure at the bottom, removes heat from the heat dissipation means and is exhausted at the top of the enclosure. This arrangement encourages a 'chimney' effect to be created in use drawing cool air in at the lower inlet and expelling air from the upper opening.

In one embodiment the heat dissipation means is located in the lower portion of the enclosure adjacent the electro-thermal cooling means. In some preferred embodiments, however, the heat dissipation means extends along substantially the whole length of the enclosure, and thus substantially the whole length of the vessel. This maximises the surface area of the heat dissipation means to improve heat dissipation.

In some preferred embodiments the enclosure has a lesser cross-sectional area in the upper part than in the lower part - e.g. the enclosure could taper above the heat dissipation means. This has been found to enhance the dissipation of heat in some circumstances.

In some embodiments the chimney effect of the enclosure may render a fan unnecessary.

In some preferred embodiments a fan may be provided to increase the air flow over the heat dissipation means. The fan is preferably located in the enclosure in which the heat dissipation means is located. It has been found that for optimum heat dissipation the fan should preferably be located in the upper region of the enclosure adjacent to the openings. Preferably the fan should drive air in the direction of the thermal gradient along the heat dissipation means.

The cover is preferably formed integrally with the handle of said vessel. This gives a neat appearance and minimises the number of parts needed.

The enclosure may be arranged to extend through the vessel handle or may extend between the vessel handle and the vessel wall. In one embodiment the enclosure extends both within the handle and between the handle and vessel wall.

The vessel may simply be provided with an ordinary spout on the upper edge. Preferably though the vessel is provided with a spout arrangement adapted to draw liquid from the bottom of the vessel so that, in use, the user will pour the coldest liquid first. Such an arrangement ensures that if the vessel has been partially refilled with liquid the denser, already-cooled liquid, which would be at the bottom, is poured first.

This arrangement is novel and inventive in its own right. When viewed from a third aspect therefore, the present invention provides a liquid cooling vessel comprising an electro-thermal cooling means and a spout arrangement adapted in use to draw liquid from the bottom of the vessel.

Preferably the spout arrangement comprises a substantially vertical channel having an opening towards the bottom of the vessel to allow entry of liquid from the main vessel into the channel.

In preferred embodiments the channel is defined by a separating wall provided within the vessel. In some preferred embodiments the separating wall is integrally moulded with the vessel body.

In other preferred embodiments the separating wall, which defines the channel, is located removably in the vessel. For example, the wall may comprise a separate component. Preferably, however, the wall is integrally formed with another part of the vessel. This could, for example, be the lid. In preferred embodiments though the separating wall is formed integrally with a reservoir for untreated water in a portable water treatment and storage vessel. The reservoir is preferably removably mounted within the vessel with the separating wall extending from the underside of the reservoir into the main vessel to define the channel for water to flow to the spout.

The wall may define the channel completely but preferably does so in conjunction with the vessel body. Preferably the separating wall has a curved profile which matches that of the vessel body, for example, curved side extensions could be provided. The separating wall should closely fit the sides of the vessel to minimise the leakage of warmer water from the main vessel into the spout channel. When the water is poured from the jug the pressure of the water in the main vessel will press the separating wall against the vessel body and thereby help minimise such warmer water leakage.

Preferably the separating wall of the spout is thinner than the vessel body wall. This enables it to be sufficiently thermally conductive to ensure that the liquid trapped within the channel is cooled by conduction.

Where a spout arrangement as set out above is provided it is further preferred that the electro-thermal cooling means is arranged to preferentially cool liquid at the bottom of the vessel. In a preferred embodiment, for example, an asymmetric heat sink is provided having a greater cooling surface area at a lower part thereof. This arrangement would concentrate the heat transfer with the liquid in the lower area of the vessel. Therefore for a given power of electro-thermal cooling means a faster rate of cooling is achieved for a portion of the liquid located in the lower part of the vessel.

In some preferred embodiments a substantially horizontal dividing wall is provided in the main vessel the wall being arranged so as to divide the vessel into upper and lower portions in fluid communication with one another. Preferably the portions are in fluid communication in the vicinity of the electro-thermal cooling means. This wall would tend to limit the convection currents in the liquid to the lower portion to concentrate the cooling effect.

In a preferred embodiment the horizontal dividing wall and the separating wall of the spout channel are integrally formed as an insert in the main vessel body. Preferably the horizontal wall is provided with support and spacing means from the base of the vessel. Preferably the support and spacing means comprise legs integrally moulded with the insert.

In one example, the total vessel capacity is approximately 1 litre and the lower cooled portion is approximately 0.3 litres.

Preferably the vessel is arranged to cool water to between approximately 10°C and 15°C below the ambient temperature. This results in chilling the water to a similar temperature to that which would be achieved in an ordinary domestic refrigerator. It has been found however that preferred embodiments of the invention can achieve such a degree of chilling significantly quicker than by placing a filter jug in an ordinary refrigerator.

The vessel of the invention is preferably mains powered in which case a power supply is required to convert to a DC voltage suitable for the electro-thermal device. The vessel may be either a fixed cord or preferably cordless arrangement, comprising a jug portion and a base portion. Such arrangements are known for domestic jug kettles.

Most preferably the base comprise a cordless connector of the type which allows an electrical connection to be made irrespective of the angular placement of the vessel and the base.

If the vessel is of a cordless arrangement the power supply unit may, in one embodiment, be located within an enclosure in the lower portion of the portable jug portion. This minimises the size of the base portion.

In an alternative embodiment the power supply unit is provided in the base portion of the appliance. This minimises the weight of the part to be carried and also give greater stability and minimises the chance of base pickup which can be a problem with some cordless connectors.

It has been appreciated that by the Applicant that by locating the power supply unit in the base portion of the appliance only a low voltage DC power supply is provided to the jug portion. Thus a lower specification cordless connector could be used than would be required for a mains connector. Preferably, however, a standard cordless connector is used such as the Applicant's P72 range of 360°C cordless connectors in order to minimise costs.

Certain preferred embodiments of the present invention will now be described, by way of example only, with reference to the accompanying drawings in which:
Fig. 1 shows an upper front perspective view of the exterior of a water storage and cooling device according to a first embodiment;
Fig. 2 shows a cut-away perspective view from the rear of the device of Fig. 1;
Fig. 3 shows a cut away perspective view of the vessel portion of device of Fig. 1 with the heat sink and heat dissipation means removed;
Fig. 4 shows a cut-away perspective view from the front of a water storage and cooling device according to a second embodiment;
Fig. 5a shows a partial exploded view of a further embodiment with another heat sink which may be used in accordance with the invention;
Fig. 5b shows a partial exploded cutaway view of the embodiment of Fig. 5a;
Fig 6a shows a rear perspective view of another embodiment of the invention with the outer moulding removed;
Fig 6b shows an alternative perspective view of the embodiment of Fig 6a;
Fig 7a shows a cut-away perspective view of a further embodiment;
Fig 7b shows a perspective view of the vessel body of the embodiment of Fig 7a;
Fig 8a shows a cut-away perspective view of a further embodiment;
Figs 8b and 8c show perspective views of the reservoir of the embodiment of Fig 8a;
Fig 9 shows a cut-away perspective view of a further embodiment.

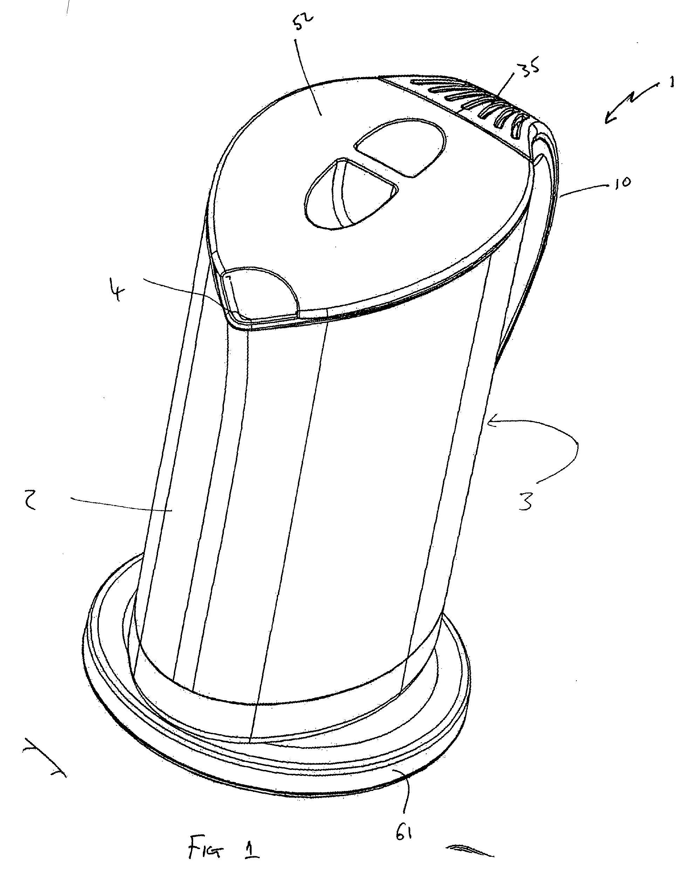

A preferred embodiment of the present invention will now be described with reference to Figs. 1, 2 and 3. A jug device for filtering, storing and cooling water is shown generally by the reference numeral 1. The jug comprises a plastics main vessel portion 2, similar to those known for use in domestic jug kettles, and a cooling means 5. As known in the art of filter jugs, the jug 1 further comprises a reservoir 50 for untreated water which locates in the upper portion of the main vessel 2, a filter 51 in fluid communication with the reservoir 50 and a lid 52.

The main vessel 2 is arranged so that a side wall 3 has a substantially flat profile while the other side walls are curved to form a conventional, generally elliptical jug shape with a spout 4 provided opposite the flat wall 3. The flat wall 3 provides a location for the cooling means 5. The flat side wall 3 is also the wall to which the handle 10 is attached. Such an arrangement is similar to known jug kettle designs.

The main vessel 2 is constructed of an inner vessel wall 2a and an outer vessel wall 2b. The walls 2a, 2b are spaced apart from each other to provide an insulating cavity. The inner base wall 2a is provided with integrally moulded support struts 2c for spacing the inner and outer walls apart. At their top edges the inner and outer walls vessel 2a, 2b converge to form a smooth upper lip 2d. Equally however the same benefit could be achieved by having the double-walled structure extending only part-way up to the maximum water level in the main vessel 2.

In the lower portion of the flat wall 3 the outer vessel wall 3b is stepped in towards the inner vessel wall 3a to provide a suitable location for the cooling means 5.

The main vessel 2 further comprises a pair of mouldings 13a, 13b which respectively form the handle 10 and enclose the base 11 leaving an enclosure below the base of the outer vessel wall 2b. The moulding comprise upper 13a and lower 13b sections.

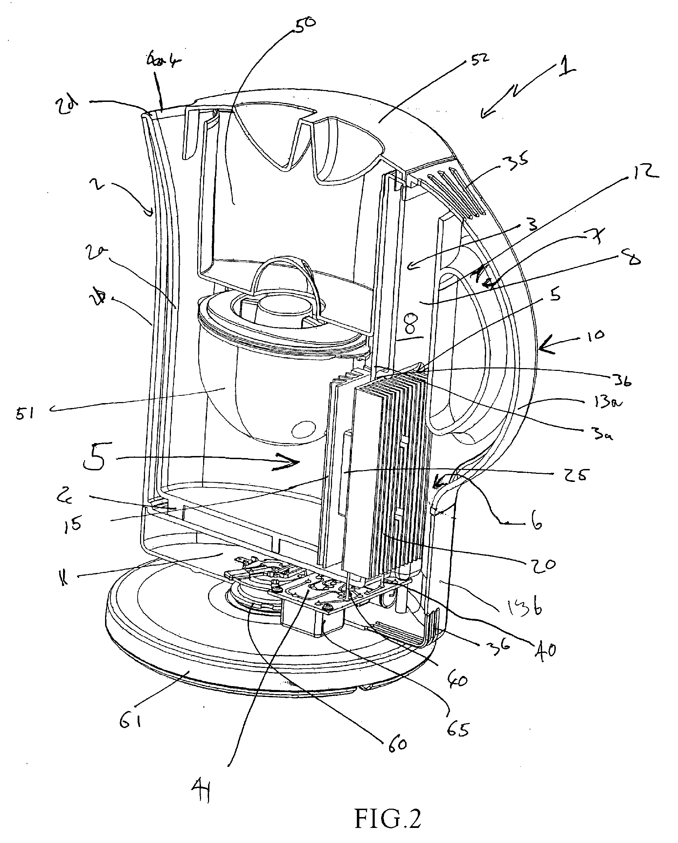

The cooling means 5 is located in the lower half of the vessel wall 3 and comprises a heat sink 15 in the main vessel 2, a heat dissipation device 20 externally of the main vessel 2 beneath the handle moulding 13a and a Peltier effect electro-thermal device 25 (see Fig. 2) sandwiched between them. A Peltier effect device 25 suitable for this application is available from Ferrotec USA The heat sink 15 and the heat dissipation device 20 comprise thermally conductive material, for example, aluminium.

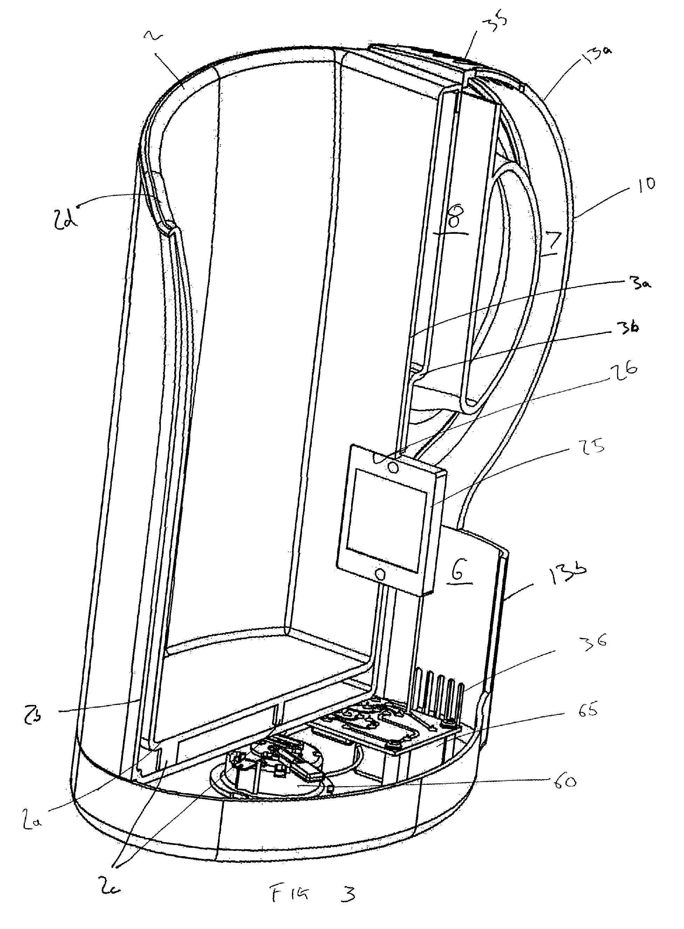

With particular reference to Figure 3, which shows the vessel with both the heat sink 15 and the heat dissipation means 20 removed, the Peltier effect device 25 is mounted within a cut-out 26 in the lower half of the vessel wall 3. The heat dissipation device 20 and the heat sink 15 are then mounted in direct thermal contact with the Peltier effect device 25. To ensure good thermal contact between the heat sink 15, the heat dissipation device 20 and the Peltier effect device 25, a thermal paste may be applied between the elements during assembly.

As shown in Fig. 2, the heat sink 15 includes a plurality of generally vertically extending fins 17 which are arranged to define a plurality of generally vertically extending channels 16. The heat sink fins 17 are arranged so that the centremost fin 17a protrudes a greater distance than the other fins and the outermost fins 17b protrude into the vessel the least distance. The fins 17 are also arranged to fan out from the centremost fin 17a.

With reference to Figure 2, the heat dissipation device 20 is located within a cavity 6 defined between the outside of the vessel side wall 3 and the base and outer mouldings 13a, 13b. The hollow handle 10 is formed by an inner D-shape portion 12 which is integrally moulded with the outer moulding 13a. A first passageway 7 in communication with the cavity 6 is defined between the curved part of the inner D-shaped portion 12 of the handle and the outer moulding 13a. A second passageway 8 also in communication with the cavity 6 is defined between the flat part of the inner D-shaped portion 12 of the handle 10 and the outer flat side wall 3b. The outer moulding 13a includes seven slots 35 which form an opening at the top of the passageways 7, 8. The base moulding 13b includes four slots 36 which provide an opening at the bottom of the cavity 6.

It will be noted that the main passageway 8 tapers towards the top. In other words it has a smaller cross-section above the heat dissipation device 20 than below it or aligned with it.

A pair of wires 40 connect the Peltier effect device 25 to a printed circuit board 41. The printed circuit board also comprises a transformer 65 and other discrete components to provide a regulated DC power supply to the Peltier device 25. The transformer 65 is electrically connected to the male part of a P72 360° cordless mains connector 60 provided in a recess within the base 11. The base unit 61 is provided with a corresponding female connector.

In use, a user lifts the lid 52 and fills the reservoir 50 with water. The water drains through the filter 51 into the main vessel portion 2 thereby removing impurities in the water.

When switched on, the power supply 41 applies a low DC voltage converted from the mains supply across the Peltier device 25. This causes heat transfer across the Peltier device 25 from the inner face (in contact with the heat sink 15) to the opposite face (in contact with the heat dissipation device 20), causing one face to be cooled and the other face to be heated.

The heat sink 15 provided within the vessel 2 improves heat transfer from the water to the Peltier device 25 and the heat dissipation device 20 provided outside the vessel 2 improves the heat transfer from the warm side of the Peltier device 25 to the air. Thus, in use, the cooling device 5 removes heat from the water contained in the vessel 2 and transfers it, via the heat dissipation device 20, to the surrounding air.

Locating the cooling means 5 on a side wall 3 of the vessel 2 encourages circulation of the water within the vessel, by forming cold convection current during cooling. As the water close to the cooling means 5 cools its density increases and therefore it moves downward. The water will then reach the base 4 of the vessel 2 and will flow outwardly away from the side wall 3. Thus, when viewed from the perspective of Fig 1, a clockwise circulation will be created in the vessel.

The provision of channels 16 within the heat sink assists in the creation of circulation within the vessel by guiding the water as it cools. In use, this arrangement helps to direct the convection current away from the cooling means 5 to the warmer areas of the main vessel 2, thus enhancing bulk cooling of the water.

As the water is cooled, the warm side of the Peltier device 25 is heated and the heat dissipation device 20 transfers this heat to the air within the cavity 6. The heated air will rise through the passageways 7 and 8 and be expelled through the openings 35. This in turn causes air to be drawn into the enclosure through the lower openings 36. Thus air flows across the heat dissipation device 20, improving heat loss from the cooling means 5.

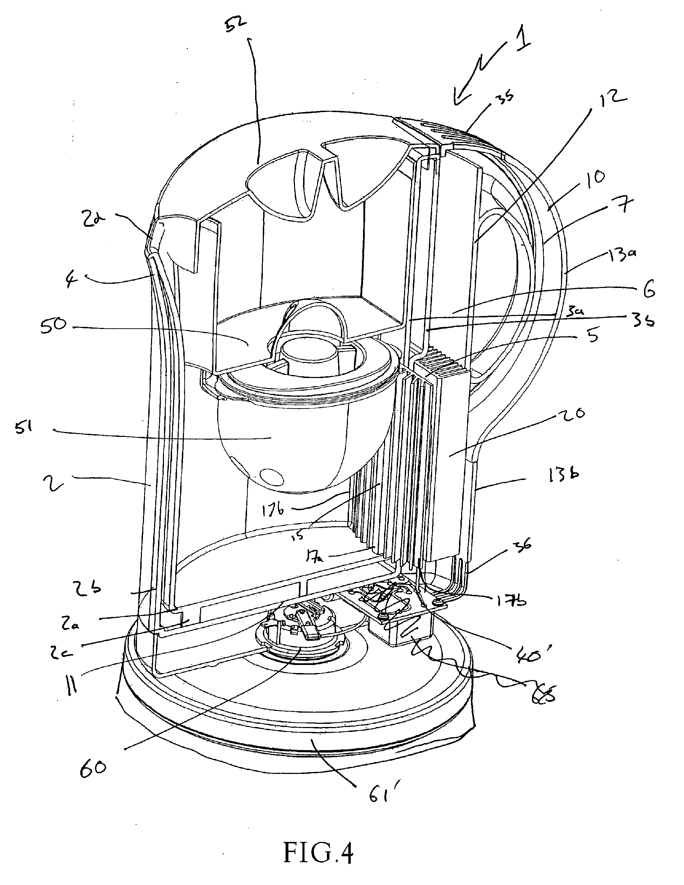

Figure 4 shows an alternative embodiment which is identical to the first except that the wires 40' connecting to the Peltier device are connected directly to the cordless connector 60. In this embodiment the power supply (not shown) is provided in the base unit 61' and thus the cordless connector 60 transmits the low voltage DC from the power supply.

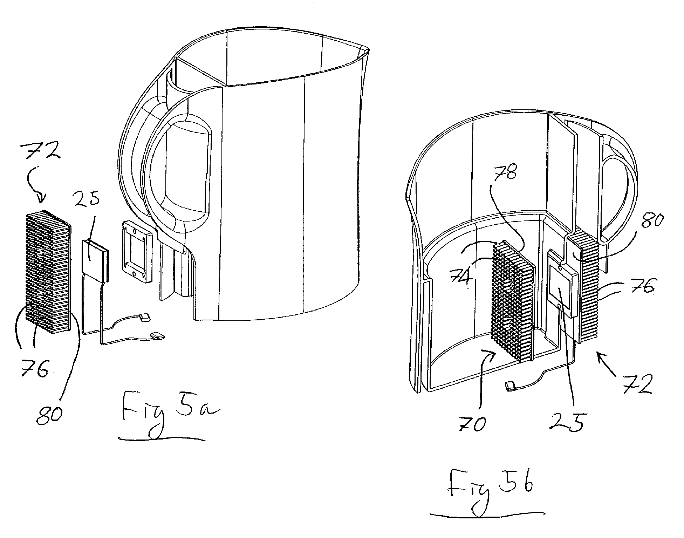

Figs. 5a and 5b show another embodiment of the invention. In this embodiment the heat sink 70 in the liquid and the heat dissipation device 72 on the warm side of the Peltier device 25 have different configurations to their counterparts in previous embodiments. Specifically, the heat sink 70 and heat dissipation device 70, 72 in Figs. 5a and 5b each have a regular rectangular array of pins 74, 76 respectively formed integrally with the bases 78, 80. By manufacturing such heat sinks with a homogenous material composition and structure in the direction of heat flow, more efficient heat transfer may be achieved for a given weight than with many known heat sink arrangements.

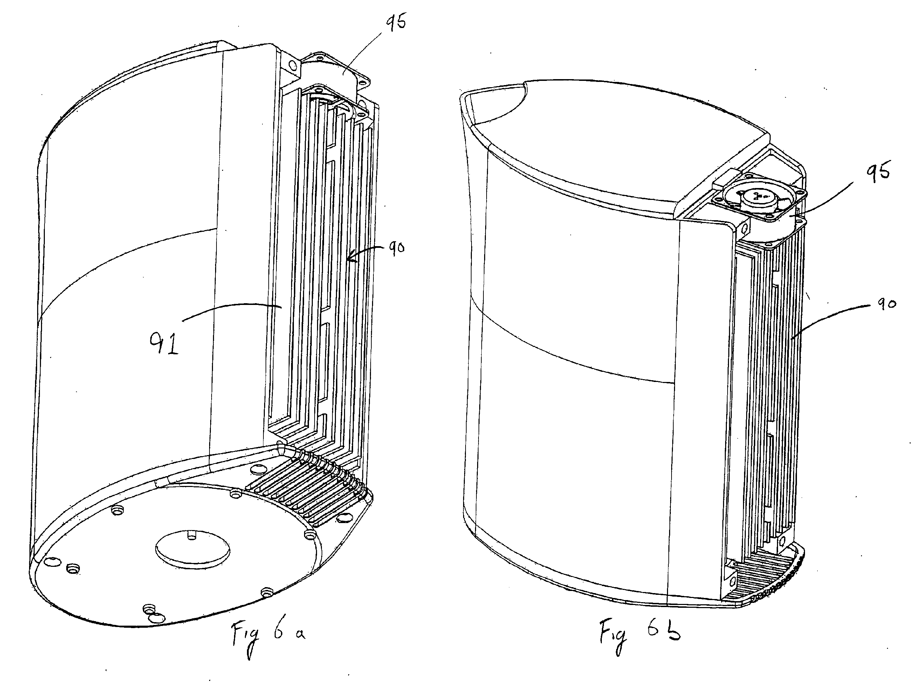

Figs. 6a and 6b show another embodiment of the invention. In this embodiment the warm side of the cooling system has a different configuration. The heat dissipation device 90 is arranged to extend substantially the full length of the cavity between the outside of the vessel wall and the outer mouldings (not shown). Although not visible in Fig. 6a or 6b, the Peltier device is however the same size and the same location as in the previous embodiments. This means that as well as a lateral thermal gradient from the root to the tip of the fins 91 of the heat dissipation device, there is also a vertical thermal gradient from the bottom to the top of each fin 91.

This embodiment also includes a fan 95 located above the heat dissipation device 90. The fan is located between the heat dissipation device 90 and the slots (not shown) at the top of the enclosure. The fan 95 increases the airflow over the heat dissipation device 90 so that more efficient heat transfer may be achieved. The air is driven in the direction of the thermal gradient.

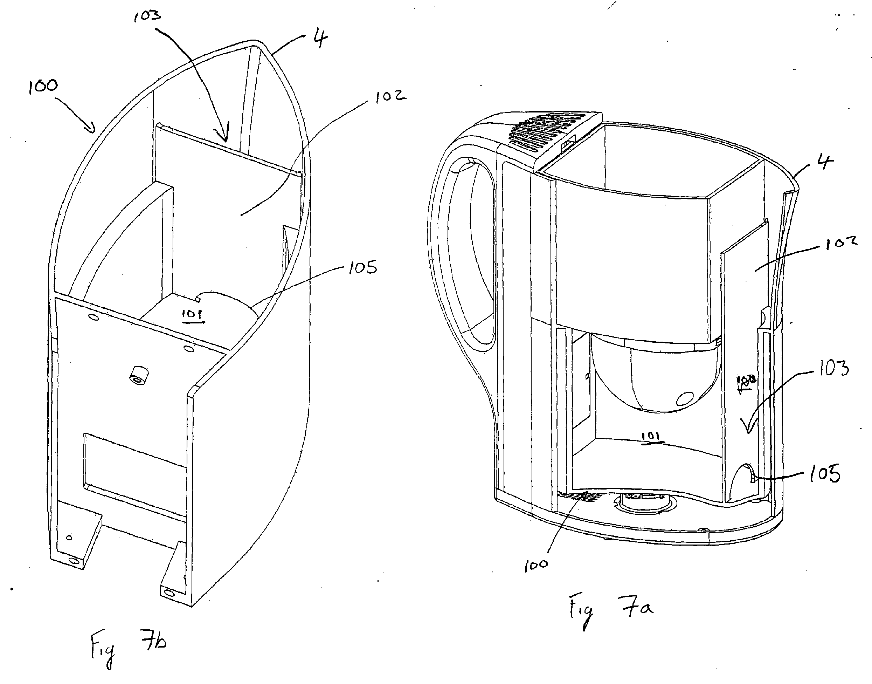

Figs 7a and 7b show another embodiment of the invention. In this embodiment the main vessel body 100 includes an integrally moulded separating wall 102. An opening 105 is provided at the bottom of the wall 102. The separating wall 102, in conjunction with the walls of the vessel body 100, therefore define a spout channel 103 between the spout 4 and the bottom of the main vessel compartment 101.

In use, when a user tips the vessel to pour water therefrom, water will flow from the spout channel 103 drawing further water from the bottom of the main vessel compartment 101 through the opening 105. Thus, water is drawn from the bottom of the vessel rather than the top as it would be if the channel 103 were not present. This means that the coolest water will be drawn first since it will sink to the bottom. This is particularly beneficial when the vessel has just been topped up with freshly filtered water which has not yet had a chance to cool.

Although water standing in the channel 103 will not come into contact with the cooling device, the wall 102 is sufficiently thin that it will be cooler by conduction. For example, the wall 102 is thinner than the main vessel wall 100.

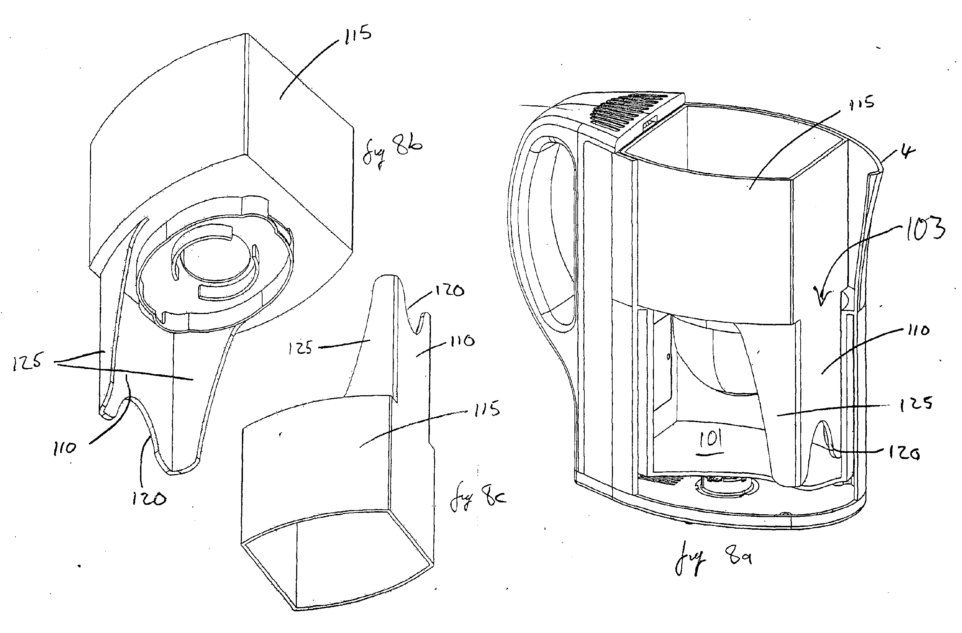

Figs 8a, 8b and 8c show an alternative embodiment for providing an arrangement that draws water from the bottom of the vessel. In this embodiment the separating wall 110 is formed integrally with the reservoir 115 for untreated water. This has the advantage over the previous embodiment that it is easier to mould. The wall 110 extends from the lower surface of the reservoir 115 and is shaped to match the profile of the main vessel body 100. A cut-out 120 is included at the lower end of the wall to form the opening. The wall 110 is further shaped to include peripheral side extensions 125 that follow the sides of the vessel.

In use, the coolest water is drawn from the bottom of the vessel first as before. Furthermore, when the vessel is tilted to pour water the water in the main vessel 101 exerts pressure on the separating wall 110 and the side extensions 125 which helps to seal them against the vessel body and prevent leakage of warmer water from the main vessel 101 into the spout channel 103.

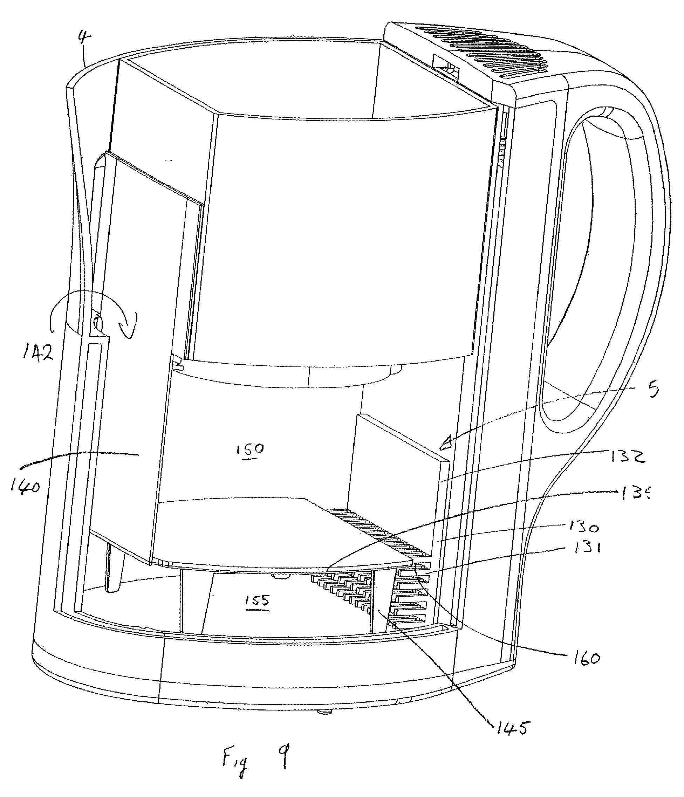

Fig 9 shows another embodiment of the invention in which the main vessel is divided broadly into an upper portion 150 and a lower portion 155 by a horizontal dividing wall 135 in an approximate volume ration of 2:1. The dividing wall is provided by the horizontal portion of an insert which is placed into the interior of the vessel and spaced from the floor of the vessel by four legs 145. The size and placement of the wall 135 is such that it extends laterally across the interior of the vessel but stops short of the vessel wall at both ends in the fore and aft direction.

The vertical portion of the insert 140 is at the front end of the vessel and defines a spout channel 142 similar to those described in the previous embodiments. As the vertical wall 140 only extends down to the horizontal wall 135 the channel 142 communicates with the lower vessel portion 155.

At the rear end the horizontal wall 135 stops short to leave gap 160 to allow access to the heat sink 130. It will be seen that the heat sink 130 of the cooling means 5 in this embodiment has a different configuration from that of previous embodiments. A lower portion 131 of the heat sink 130 is provided with an array of pins, as discussed above with reference to Fig 5, while an upper portion 132 is a free of pins. The pins 131 are, therefore, only in the lower region of the vessel 155 and hence the cooling effect will be concentrated here.

In use, approximately one third of the overall capacity of the main jug is within the lower portion 155 of the vessel. Since the heat sink 130 has a greater surface area in this region the cooling effect on the water is most concentrated in this region. The separating wall 140 ensures that the spout channel 142 is in fluid communication with this region so that when water is poured from the vessel it is drawn from this region. Water from the upper portion 150 of the main vessel will then pass through the gap 160 into the lower portion of the vessel 155 to replenish the water taken. Thus, a partially isolated amount of water is held near the base of the vessel which is more rapidly cooled than the full capacity for a given power of cooling means 5 and this water will always be poured from the vessel first. This enables a small amount of the water to be chilled very rapidly.

It will be appreciated that the above described embodiments are given by example only and that various modifications thereto may be made without departing from the scope of the invention.

## Claims

1. A portable water treatment and storage vessel comprising:
a reservoir for untreated water;
filter means in fluid communication with said reservoir; and
a main vessel portion for receiving and storing treated water;
wherein said main vessel portion comprises electro-thermal cooling means for removing heat from the treated water therein, thereby cooling the water.

2. A water treatment and storage vessel as claimed in claim 1 wherein said electro-thermal cooling means is provided on or in a side wall of the vessel such that, in use, said cooling means encourages circulation of the water being cooled within said vessel.

3. A liquid cooling vessel comprising:
an electro-thermal cooling means provided on or in a side wall of the vessel such that, in use, said cooling means encourages circulation of the liquid being cooled within the vessel.

4. A vessel as claimed in claim 2 or 3 wherein the electro-thermal device is mounted within a cut-out in the side wall.

5. A vessel as claimed in claim 4 wherein the vessel body comprises a thermally insulating material at least in a region for storing treated water.

6. A vessel as claimed in any preceding claim wherein the electro-thermal cooling means comprises a Peltier-effect device.

7. A vessel as claimed in any preceding claim wherein the cooling means includes a heat sink located within the vessel.

8. A vessel as claimed in claim 7 wherein the heat sink is mounted directly to the electro-thermal device.

9. A vessel as claimed in claim 7 or 8 wherein the shape of the heat sink is arranged to further enhance the circulation of the water within the vessel.

10. A vessel as claimed in any of claims 7, 8 or 9 wherein the heat sink defines at least one generally vertical channel.

11. A vessel as claimed in claim 10 comprising a plurality of open channels

12. A vessel as claimed in claim 11 wherein said channels are formed by a plurality of generally vertically extending fins.

13. A vessel as claimed in any of claims 7 to 11 wherein the heat sink comprises an array of pins.

14. A vessel as claimed in any preceding claim wherein the cooling means further comprises a heat dissipation means on the warm side thereof.

15. A vessel as claimed in claim 14 wherein the heat dissipation means is in direct contact with the electro-thermal device.

16. A vessel as claimed in claim 14 or 15 wherein the heat dissipation means defines at least one generally vertically extending channel.

17. A vessel as claimed in claim 16 wherein said heat dissipation means comprises a plurality of channels.

18. A vessel as claimed in claim 17 wherein the channels are formed by a plurality of generally vertically extending fins.

19. A vessel as claimed in any of claims 14 to 17 wherein said heat dissipation means comprises an array of pins.

20. A vessel as claimed in any of claims 14 to 19 wherein the heat dissipation means is at least partially covered by a cover.

21. A vessel as claimed in claim 20 wherein the cover at least partially defines an enclosure comprising openings which are spaced vertically apart in upper and lower regions of the vessel respectively such that, in use, air is drawn into the enclosure at the bottom, removes heat from the heat dissipation means and is exhausted at the top of the enclosure

22. A vessel as claimed in 21 wherein the heat dissipation means extends substantially the whole length of the enclosure.

23. A vessel as claimed in claim 20, 21 or 22 wherein the cover is formed integrally with a handle of the vessel.

24. A vessel as claimed in any claim of claims 7 to 23 wherein a fan is provided to increase the flow over the heat dissipation means.

25. A vessel as claimed in any of claims 21 to 23 wherein a fan is provided within the enclosure to increase the flow over the heat dissipation means.

26. A vessel as claimed in claim 25 wherein the fan is located in the upper region of the enclosure adjacent to the opening.

27. A vessel as claimed in any preceding claim wherein the vessel is provided with a spout arrangement adapted to draw liquid from the bottom of the vessel.

28. A liquid cooling vessel comprising:
an electro-thermal cooling means; and
a spout arrangement adapted to draw liquid from the bottom of the vessel.

29. A vessel as claimed in claim 27 or 28 wherein the spout arrangement comprises a substantially vertical channel in fluid communication with the bottom of the vessel.

30. A vessel as claimed in claim 29 wherein the channel is at least partially defined by a separating wall provided within the vessel.

31. A vessel as claimed in claim 30 wherein the separating wall is integrally moulded with the vessel body.

32. A vessel as claimed in claim 30 wherein the separating wall is removably mounted within the vessel body.

33. A portable water treatment and storage vessel as claimed in claim 30 or 32 wherein the separating wall is integrally moulded with a reservoir for untreated water.

34. A vessel as claimed in claim 33 wherein the separating wall extends from the underside of the reservoir into the main vessel to define said channel.

35. A vessel as claimed in any of claims 30 to 34 wherein the separating wall has a profile which matches the vessel body.

36. A vessel as claimed in any of claims 30 to 35 wherein the separating wall is thinner than the vessel wall.

37. A vessel as claimed in any of claims 27 to 36 wherein the electro-thermal cooling means is arranged to preferentially cool liquid at the bottom of the vessel.

38. A vessel as claimed in claim 37 comprising an asymmetric heat sink having a greater cooling surface area at a lower part thereof.

39. A vessel as claimed in claim 37 or 38 wherein a substantially horizontal dividing wall is provided in the main vessel the wall being arranged so as to divide the vessel into upper and lower portions in fluid communication with one another.

40. A vessel as claimed in claim 39 wherein the upper and lower portions are in fluid communication in the vicinity of the electro-thermal cooling means.

41. A vessel as claimed in claim 39 or 40 wherein the horizontal dividing wall and the separating wall of the spout channel are integrally formed as an insert in the main vessel body.

42. A vessel as claimed in claim 39, 40 or 41 wherein the horizontal wall is provided with support and spacing means from the base of the vessel.

43. A vessel as claimed in claim 42 wherein the support and spacing means comprise legs integrally moulded with the insert.

44. A vessel as claimed in any preceding claim wherein the vessel is arranged to cool water to between approximately 10°C and 15°C below ambient temperature.

45. A vessel as claimed in any preceding claim wherein said vessel is mains powered and further comprises a power supply unit to convert to a DC voltage suitable for the electro-thermal device.

46. A vessel as claimed in claim 45 wherein said vessel is a cordless arrangement comprising a jug portion and a base portion.

47. A vessel as claimed in claim 46 comprising a cordless connector is of the type which allows an electrical connection to be made irrespective of the angular placement of the vessel and the base.

48. A vessel as claimed in any preceding claim wherein the vessel comprises a double walled construction.
